# EUROPÄISCHE PATENTSCHRIFT

(11) **EP 0 816 732 B1**
(45) Veröffentlichungstag und Bekanntmachung des Hinweises auf die Patenterteilung: **23.05.2001**
(21) Anmeldenummer: 97104266.8
(22) Anmeldetag: 13.03.1997
(51) Int. Cl.: F16K 31/06, F02M 25/08

(54) **Elektromagnetisches Ventil**
Electromagnetic valve
Soupape électromagnétique

(30) Priorität: 01.07.1996 DE 19626290
(43) Veröffentlichungstag der Anmeldung: 07.01.1998
(73) Patentinhaber: Firma Carl Freudenberg, 69469 Weinheim (DE)
(72) Erfinder: Zabeck, Sebastian, 69469 Weinheim (DE); Tinz, Reinhard, 64401 Gross-Bieberau (DE); Heinemann, Joachim, 69517 Gorxheimertal (DE)

(56) Entgegenhaltungen:
- EP-A- 0 234 765
- WO-A-93/02282
- DE-A- 2 052 307
- DE-A- 4 305 987
- DE-A- 4 338 194
- DE-A- 4 409 033
- GB-A- 1 383 634
- US-A- 4 901 974
- US-A- 5 211 151
- US-A- 5 579 741

## Beschreibung

### Technisches Gebiet

Die Erfindung betrifft ein elektromagnetisches Ventil, insbesondere für die Verwendung bei einem Verbrennungsmotor. Das Ventil weist ein Gehäuse auf, in welchem sich eine Spule mit einem in der Spule geführten Magnetanker und ein federbetätigter Ventilkörper befinden.

### Stand der Technik

Aus der DE-OS-44 09 033 ist ein Schaltventil bekannt, das eine zwischen Magnetanker und Ventilplatte eingespannte Zwischenstange aufweist, die im Ventilgehäuse innerhalb von Längsrippen radial geführt ist. Die Ventilplatte ist in einem Kugelpfannenlager radial und axial gelagert, wobei die Zwischenstange ohne radiale Lagerung am Magnetanker anliegt. Das Schaltventil findet insbesondere Anwendung bei Brennkraftmaschinen, beispielsweise bei einer Entlüftungsvorrichtung für einen Brennstofftank oder als Absperrventil in einem Kurbelgehäuse in einem Entlüftungssystem.

Derartige Ventile werden für den Einsatz unter rauhen Bedingungen, z.B. staubhaltige oder ölhaltiger Luft bei Kraftfahrzeugen verwendet. Als Absperrventile müssen sie hohe Anforderungen hinsichtlich Dichtheit über eine lange Lebensdauer wartungsfrei erfüllen. Weiterhin muß eine wirtschaftliche Fertigung dieses Massenproduktes möglich sein.

Die bekannte Konstruktion besteht immer noch aus einer relativen Vielzahl von Teilen mit zum Teil komplizierten Geometrien. Weiterhin besteht die Gefahr, daß Schmutzpartikel in den Ankerführungsbereich des Magnetankers gelangen können.

Aufgabe der vorliegenden Erfindung ist es, einen besseren Schutz gegen das Eindringen von Schmutzpartikeln in den sensiblen Ankerführungsbereich zu bieten und gleichzeitig eine einfache Konstruktion mit einem einfachen Aufbau zu erhalten.

### Darstellung der Erfindung

Erfindungsgemäß weist der Ventilkörper an seiner der Spule zugewandten Seite einen Wulst auf, der in vollständig geöffnetem Zustand des Ventilkörpers zur dichtenden Anlage an die Spule kommt. In geöffnetem Zustand, also bei maximaler Durchströmung, wird der Ventilkörper durch die Feder gegen die Spule gedrückt und liegt mit dem Wulst an dieser an. Dadurch wird eine Abdichtung hergestellt, die weitgehend verhindert, daß Schmutzpartikel in den sensiblen Ankerführungsbereich zwischen Magnetanker und Spule gelangen. Im geschlossenen Zustand wird dieser Bereich freigegeben. Da dann jedoch keine Durchströmung stattfindet, ist dies unkritisch.

Durch die stoffliche Verbindung des Stößels mit dem Ventilkörper wird die Gefahr der Verschmutzung des Führungsbereichs Stößel/Ventilkörper verringert und eine wirtschaftlichere Herstellung erreicht. Das ballig ausgebildete Ende des Stößels stellt den benötigten Spielausgleich des Ventilsitzes allein durch konstruktive Maßnahmen her. Durch die Abdichtung des an der Spule anliegenden Wulstes wird auch die Beruhigungsfläche des Stößels mit dem Magnetanker gegen das Eindringen von Schmutzpartikeln geschützt.

Eine zusätzliche Führung wird dadurch erreicht, daß das ballige Ende mit einer pfannenartigen Aufnahme im Magnetanker zusammenwirkt.

Hat der Ventilstößel eine Länge, die kleiner als der halbe Außendurchmesser des Ventilkörpers ist, so ist eine zusätzliche Führung des Ventilstößels aufgrund der kurzen Baulänge nicht notwendig.

Die zentrale Anordnung des Stößels und seiner Führung im Magnetanker ermöglicht es, das Ventil in horizontaler Lage einzubauen. Bei der Führung des Stößels im Außenbereich ist dies wegen der erhöhten Reibung und Schwerkraftablagerungen von Schmutz nicht möglich.

Zur Herstellung der Abdichtung weist der Ventilkörper am Ventilsitz eine Dichtung auf, die als separates Teil ausgebildet ist. Die Dichtung wird in den Ventilsitz eingelegt und schnappt dort ein. Dadurch kann eine besonders kostengünstige Herstellung erreicht werden, da die bekannte Dichtung sehr flach und fein ist und auf den Ventilkörper aufvulkanisiert werden muß.

Das Eindringen von Schmutzpartikeln kann weiterhin dadurch vermieden werden, daß auf einem durch den Ventilkörper verschließbaren Eintrittsstutzen ein Filter aufgesteckt ist.

Eine strömungstechnisch günstige Form wird dadurch erreicht, daß der Ein- oder Auslaßstutzen in derselben oder einer parallel versetzten Ebene wie der Ventilsitz angeordnet ist, da hier weniger Umlenkungen und daher geringere Strömungswiderstände zu geringeren Strömungsverlusten führen.

### Kurzbeschreibung der Figuren

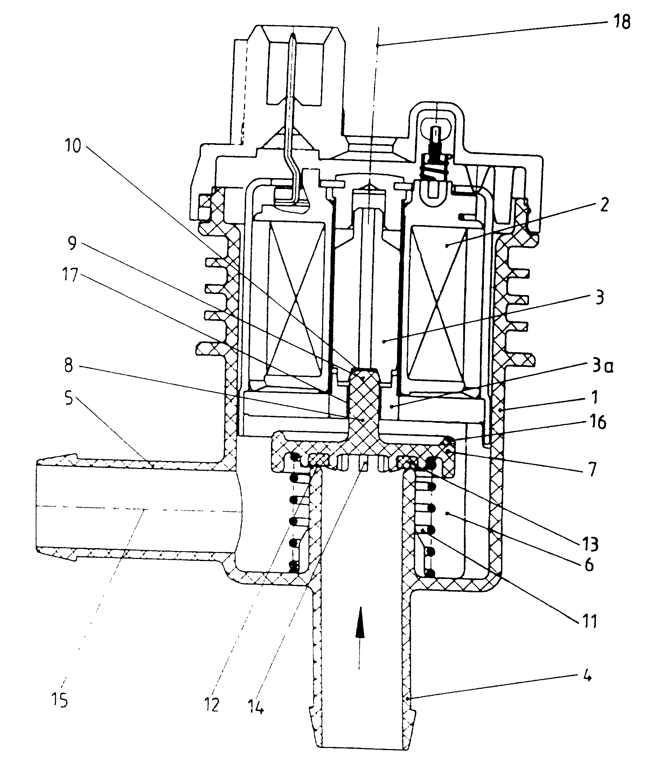

In der Zeichnung wird ein Absperrventil eines Entlüftungssystems für Kurbelgehäuse gemäß der Erfindung in geschlossenem, d.h. bestromten Zustand dargestellt.

### Ausführung der Erfindung

Das elektromagnetische Ventil weist ein Gehäuse 1 auf, in welchem sich eine elektrische Spule 2 befindet, die einen Magnetanker 3 umschließt. Ferner ist das Gehäuse 1 mit einem Einlaßstutzen 4 und einem Auslaßstutzen 5 versehen. Das Gehäuse 1 wird von der elektrischen Spule 2 nur teilweise ausgefüllt, so daß ein mit dem Einlaßstutzen 4 und dem Auslaßstutzen 5 in Verbindung stehender Raum 6 zur Verfügung steht.

Dieser Raum 6 wird mittels eines Ventilkörpers 7 gegenüber dem Einlaßstutzen 4 abgesperrt oder freigegeben. Das Ventil weist lediglich zwei Betriebspunkte auf, entweder voll geöffnet oder geschlossen. Zwischenstellungen sind nicht vorgesehen. Der Ventilkörper 7 weist auf der der Spule 2 zugewandten Seite einen stofflich verbundenen Stößel 8 auf, welcher durch einen Polplattenkern 3a hindurchragt und zur Anlage an eine Stirnseite des Magnetankers 3 kommt. Das Ende 9 des Stößels 8 ist ballig ausgebildet und ruht in einer pfannenartigen Aufnahme 10 des Magnetankers 3. Grundsätzlich kann der Magnetanker 3 auch eine glatte Stirnseite aufweisen, auf welcher das ballige Ende des Stößels 8 ruht, da die Führung des Stößels in dem Polplattenkern 3a in ausreichender Weise geschieht. Dadurch ist eine einfachere Herstellung des Magnetankers 3 möglich. Die Länge des Ventilstößels 8 ist derart bemessen, daß sie kleiner als der halbe Außendurchmesser des Ventilkörpers 7 ist.

Eine um den Einlaßstutzen 4 angeordnete Druckfeder 11 sorgt für ein zuverlässiges Abheben des Ventilkörpers 7 von seinem Sitz 12 auf dem Einlaßstutzen 4, wenn die Stromzufuhr der elektrischen Spule 2 unterbrochen wird. Damit wird eine strömungstechnische Verbindung zwischen dem Einlaßstutzen 4 und dem Auslaßstutzen 5 über den Raum 6 hergestellt.

Zum Verschließen des Ventils wird die Spule 2 mit Strom beaufschlagt, wodurch auf den Magnetanker 3 eine Kraft in Richtung des Ventilkörpers 7 wirkt. Der Magnetanker 3 bewegt sich innerhalb der Spule 2 gegen die Federkraft der Feder 11 in Richtung Ventilkörper 7, wobei dieser zusammen mit dem Magnetanker 3 bewegt wird. Die Bewegung kommt dadurch zum Stillstand, daß der Ventilkörper 7 auf dem Sitz 12 des Einlaßstutzens 4 aufsitzt und diesen mittels einer Dichtung 13 abdichtet.

Der Ventilkörper 7 weist zur Aufnahme der Dichtung 13 einen Kranz von Schnapphaken 14 auf, welche beim Einlegen der Dichtung zunächst aufgespreizt werden, um dann, wenn die Dichtung in ihrer Endlage angekommen ist, wieder zurückzuschnappen. Hierdurch wird eine zufriedenstellende Festlegung der Dichtung 13 im Ventilkörper 7 in einfacher Weise erreicht.

Dem Eintrittsstutzen 4 kann ein Filter vorgeschaltet werden, z.B. durch Aufstecken.

Das über den Eintrittsstutzen 4 in den Raum 6 eintretende Medium wird bei geöffnetem Ventil vom Ventilkörper 7 von einer Axialströmung in eine Radialströmung umgelenkt. Um weitere Strömungsverluste gering zu halten, ist der Auslaßstutzen 5 in einer gegenüber dem Ventilsitz 12 parallel versetzten Ebene 15 angeordnet. Grundsätzlich ist aber auch eine umgekehrte Durchströmung des Ventils möglich, wodurch ein breites Feld von Einsatzmöglichkeiten begründet wird.

Im geöffneten Zustand kommt ein auf der der Spule 2 zugewandten Seite des Ventilkörpers 7 angeordneter Ringwulst 16 zur Anlage an die Spule und schützt einen zwischen dem Polplattenkern 3a des Magnetankers 3 und den Stößel 8 gelegenen Spalt 17 gegen das Eindringen von Verunreinigungen.

Der Ringwulst 16 ist im Ausführungsbeispiel ein Randwulst, es kann aber auch ein näher zum Stößel 8 gelegener Ringwulst angebracht werden. Gegebenenfalls können mehrere Ringwulste zur Verwirklichung einer Labyrinthdichtung vorgesehen sein. Der Wulst 16 ist dabei stets in einem größeren radialen Abstand zur Bewegungsachse 18 des Magnetankers 3 als der Ankerführungsbereich angeordnet.

Gleichzeitig mit dem Ringspalt 17 wird durch den Wulst 16 auch die Aufnahme 10 des Endes 9 des Ventilstößels 8 gegen das Eindringen von Verunreinigungen geschützt.

## Patentansprüche

1. Elektromagnetisches Ventil, insbesondere für die Verwendung bei einem Verbrennungsmotor, aufweisend ein Gehäuse (1), in welchem sich eine Spule (2) mit einem in der Spule geführten Magnetanker (3) und ein über einen Stößel (8) mit dem Magnetanker (3) zusammenwirkender, federbetätigter Ventilkörper (7) befinden, **dadurch gekennzeichnet,** daß der Ventilkörper (7) an seiner der Spule (2) zugewandten Seite einen Wulst (16) aufweist, der in vollständig geöffnetem Zustand des Ventilkörpers (7) zur dichtenden Anlage an die Spule (2) kommt.

2. Elektromagnetisches Ventil nach Anspruch 1, dadurch gekennzeichnet, daß der Ventilkörper (7) auf der der Spule (2) zugewandten Seite einen stofflich verbundenen Ventilstößel (8) aufweist, dessen Ende (9) ballig ausgebildet ist.

3. Elektromagnetisches Ventil nach Anspruch 2, dadurch gekennzeichnet, daß der Magnetanker (3) eine pfannenartige Aufnahme (10) des Endes (9) des Ventilstößels (8) aufweist.

4. Elektromagnetisches Ventil nach einem der Ansprüche 1 bis 3, dadurch gekennzeichnet, daß der Ventilstößel (8) eine Länge hat, die kleiner als der halbe Außendurchmesser des Ventilkörpers (7) ist.

5. Elektromagnetisches Ventil nach einem der Ansprüche 1 oder 4, dadurch gekennzeichnet, daß der Ventilstößel (8) zentral angeordnet und im Magnetanker (3) geführt ist.

6. Elektromagnetisches Ventil nach einem der Ansprüche 1 bis 5, dadurch gekennzeichnet, daß der Ventilkörper (7) am Ventilsitz eine einschnappbare Dichtung (13) aufweist.

7. Elektromagnetisches Ventil nach einem der Ansprüche 1 bis 6, dadurch gekennzeichnet, daß auf einem durch den Ventilkörper (7) verschließbaren Eintrittsstutzen (4) ein Filter aufgesteckt ist.

8. Elektromagnetisches Ventil nach einem der Ansprüche 1 bis 7, dadurch gekennzeichnet, daß der Ein- oder Auslaßstutzen (4, 5) in derselben oder einer parallel versetzten Ebene wie der Ventilsitz (12) angeordnet ist.

## Claims

1. An electromagnetic valve, in particular for use in an internal combustion engine, having a housing (1) in which there are located a coil (2), with an armature (3) guided in the coil, and a spring-actuated valve body (7), which interacts with the armature (3) via a tappet (8), characterized in that, on its side which is directed towards the coil (2), the valve body (7) has a bead (16) which, in the fully open state of the valve body (7), comes into sealing abutment against the coil (2).

2. An electromagnetic valve according to Claim 1, characterized in that, on the side which is directed towards the coil (2), the valve body (7) has a material-bonded valve tappet (8), of which the end (9) is of convex design.

3. An electromagnetic valve according to Claim 2, characterized in that the armature (3) has a socket-like mounting (10) for the end (9) of the valve tappet (8).

4. An electromagnetic valve according to any one of Claims 1 to 3, characterized in that the valve tappet (8) is of a length which is smaller than half the external diameter of the valve body (7).

5. An electromagnetic valve according to either of Claims 1 and 4, characterized in that the valve tappet (8) is centrally arranged and is guided in the armature (3).

6. An electromagnetic valve according to any one of Claims 1 to 5, characterized in that the valve body (7), on the valve seat, has a snap-in seal (13).

7. An electromagnetic valve according to any one of Claims 1 to 6, characterized in that a filter is plugged on an inlet stub (4), which can be closed by the valve body (7).

8. An electromagnetic valve according to any one of Claims 1 to 7, characterized in that the inlet or outlet stub (4, 5) is arranged in the same plane as the valve seat (12) or in a plane which is offset parallel to said valve seat.

## Revendications

1. Soupape électromagnétique, destinée notamment à être utilisée dans un moteur à combustion, comprenant un boîtier (1) dans lequel se trouvent une bobine (2) avec une armature (3) passant dans la bobine et un corps de soupape (7) actionné par un ressort et agissant en concours avec l'armature (3) par le biais d'un poussoir (8), caractérisée en ce que le corps de soupape (7) est pourvu, sur son côté tourné vers la bobine (2), d'un bourrelet (16) qui, lorsque le corps de soupape (7) est totalement ouvert, se met en contact étanche avec la bobine (2).

2. Soupape électromagnétique selon la revendication 1, caractérisée en ce que le corps de soupape (7) est pourvu, sur le côté tourné vers la bobine (2), d'un poussoir de soupape (8) solidaire dont l'extrémité (9) est exécutée de manière à être bombée.

3. Soupape électromagnétique selon la revendication 2, caractérisée en ce que l'armature (3) est pourvue d'un logement (10) en cavité pour l'extrémité (9) du poussoir de soupape (8).

4. Soupape électromagnétique selon l'une des revendications 1 à 3, caractérisée en ce que le poussoir de soupape (8) a une longueur inférieure à la moitié du diamètre extérieur du corps de soupape (7).

5. Soupape électromagnétique selon l'une des revendications 1 ou 4, caractérisée en ce que le poussoir de soupape (8) est disposé de manière centrale et passe dans l'armature (3).

6. Soupape électromagnétique selon l'une des revendications 1 à 5, caractérisée en ce que le corps de soupape (7) est pourvu, au niveau du siège de soupape, d'une garniture d'étanchéité (13) qui peut être emboîtée.

7. Soupape électromagnétique selon l'une des revendications 1 à 6, caractérisée en ce qu'un filtre est posé sur une tubulure d'entrée (4) qui peut être fermée par le corps de soupape (7).

8. Soupape électromagnétique selon l'une des revendications 1 à 7, caractérisée en ce que la tubulure d'entrée ou de sortie (4, 5) est située dans le même plan que le siège de soupape (12) ou dans un plan décalé de manière parallèle à celui-ci.
